# EUROPÄISCHE PATENTSCHRIFT

(11) **EP 3 040 558 B1**
(45) Veröffentlichungstag und Bekanntmachung des Hinweises auf die Patenterteilung: **30.10.2019**
(21) Anmeldenummer: 15003526.9
(22) Anmeldetag: 11.12.2015
(51) Int. Cl.: F04D 1/00, F04D 15/00, F25B 29/00, F24D 19/10

(54) **VERFAHREN ZUR STEUERUNG EINER DREHZAHLGEREGELTEN KREISELPUMPE IN EINEM KOMBINIERTEN HEIZ-KÜHLSYSTEM UND KREISELPUMPE**
METHOD FOR CONTROLLING A SPEED-CONTROLLED CENTRIFUGAL PUMP IN A COMBINED HEATING COOLING SYSTEM AND CENTRIFUGAL PUMP
PROCÉDÉ DE COMMANDE D'UNE POMPE CENTRIFUGE À RÉGULATION DE RÉGIME DANS UN SYSTÈME COMBINÉ REFROIDISSEMENT/CHAUFFAGE ET POMPE CENTRIFUGE

(30) Priorität: 31.12.2014 DE 102014019401
(43) Veröffentlichungstag der Anmeldung: 06.07.2016
(73) Patentinhaber: WILO SE, 44263 Dortmund (DE)
(72) Erfinder: Oppermann, Jens, 58239 Schwerte (DE)
(74) Vertreter: Cohausz Hannig Borkowski Wißgott

(56) Entgegenhaltungen:
- EP-A2- 2 375 174
- JP-A- H06 259 146
- US-A1- 2009 319 087
- Aquatherm: "Sistemi innovativi in polipropilene fusiolen Sistemi di riscaldamento e raffrescamento a parete e a soffitto 800-259925", , 1 March 2010 (2010-03-01), pages 1-4, XP055434549, www.Aquatherm.de Retrieved from the Internet: URL:http://www.aquatherm-pipesystems.com/f ileadmin/_migrated/content_uploads/Catalog o_climasystem.pdf [retrieved on 2017-12-12]

## Beschreibung

Die Erfindung betrifft ein Verfahren zur Steuerung einer drehzahlgeregelten Kreiselpumpe in einem kombinierten Heiz-Kühlsystem, das in einem Heizbetrieb und in einem Kühlbetrieb betrieben werden kann und das zumindest einen Verbraucher umfasst, zu dem die Kreiselpumpe ein Medium von einem zentralen Wärme- oder Kälteerzeuger fördert. Darüber hinaus betrifft die Erfindung eine Kreiselpumpe für ein derartiges kombinierten Heiz-Kühlsystems.

Ein Verfahren dieser Gattung ist aus der US Anmeldung US 2009/319087 A1 bekannt. Unterhalb einer bestimmten Grenztemperatur des Mediums im Heizbetrieb wird hier die Pumpe bei einer ersten Drehzahl N1 und oberhalb der Grenztemperatur bei einer zweiten Drehzahl N2 betrieben. Unabhängig davon wird die Pumpe oberhalb einer bestimmten Grenztemperatur des Mediums im Kühlbetrieb bei einer dritten Drehzahl N1' und unterhalb dieser Grenztemperatur bei einer vierten Drehzahl N2' betrieben. Die Drehzahlen werden berechnet unter Berücksichtigung von Nebenbedingungen wie der Außentemperatur und dem Wärmeverlust des Raumes, wobei die Drehzahlen N2, N2' einen erforderlichen Minimalvolumenstrom durch die Verbraucher sicherstellen und die Drehzahlen N1, N1' eine beliebige Drehzahl im zwischen N2, N2' und einer Nenndrehzahl sind.

In der Vergangenheit spielte beim Bau von Gebäuden nur die Beheizung eine wesentliche Rolle. Doch durch die Verbesserung des Wärmedämmstandards ist der Heizbedarf eines Gebäudes in den letzten Jahren deutlich zurückgegangen. Ganz im Gegensatz dazu gewinnt die Kühlleistung speziell für Bürogebäude, die mit vielen technischen und wärmeabgebenden Geräten ausgestattet sind und auch höhere Glasflächenanteile aufweisen, vor allem in den Sommermonaten immer mehr an Bedeutung. Aus diesem Grund ist eine Kombination von Heiz- und Kühlsystemen in Bürogebäuden heutzutage häufig anzutreffen. Die benötigten Heiz- und Kühlleistungen hängen dabei von den Heiz- und Kühllasten ab, die in Abhängigkeit der Gebäudearchitektur sehr stark variieren können.

Zur Beheizung und Kühlung gibt es sehr viele mögliche Übergabesysteme die in einem Bürogebäude installiert werden können. Eine sehr moderne Art der Beheizung und Kühlung eines Bürogebäudes sind die kombinierten Heiz- und Kühlsysteme. Bei diesen werden dieselben Übergabesystem zum Heizen und Kühlen verwendet, um einen Raumbereich auf eine bestimmte Solltemperatur zu bringen. Sie werden von demselben Medium durchströmt, das für den Heizbetrieb aufgewärmt und für den Kühlbetrieb herunter gekühlt wird. Die Übergabesysteme, oder Verbraucher genannt, sind in der Regel thermisch aktive Flächen mit einer vergleichsweise großen Oberfläche zur Wärmeabgabe bzw. -aufnähme.

Bekannt sind Deckensysteme, bei denen sich Rohrleitungen wie bei einer Fussbodenheizung schlangen- oder kreisförmig durch die Decke eines Raumes erstrecken. Gleiches ist bei Wänden bekannt. Diese Decken oder Wände bilden regelbare Temperierzonen zum Heizen oder Kühlen des Raumes. Sie überzeugen durch geringere Investitionskosten, da zur Beheizung und Kühlung nur ein einziges Übergabesystem installiert werden muss. Zudem ist dieses Übergabesystem sehr effizient, da aufgrund der großflächig verlegten Heiz-/Kühlflächen mit sehr niedrigen Systemtemperaturen gearbeitet werden kann.

Bei Heizungsanlagen und Kühlanlagen muss die das Heiz- bzw. Kühlmedium zu dem Verbraucher oder den Verbrauchern fördernde Kreiselpumpe stets leistungsmäßig angepasst sein, damit die Verbraucher weder überversorgt noch unterversorgt werden. Hierzu ist die Kreiselpumpe für einen bestimmten Betriebspunkt auszulegen, der von der gewünschten Temperaturspreizung zwischen Vorlauf und Rücklauf abhängig ist. Die Kreiselpumpe wird so eingestellt, dass ihre Förderhöhe und ihr Volumenstrom die gewünschte Temperaturspreizung gewährleisten. Bei einer Kreiselpumpe für ein kombiniertes Heiz-Kühlsystem führt eine solche Einstellung jedoch zu wiederstreitenden Interessen, da im Heizbetrieb und im Kühlbetrieb unterschiedliche Temperaturspreizungen erforderlich sind.

So kann beispielsweise ein Heizkreis für eine Deckenheizung für eine Vorlauftemperatur von 35°C und eine Rücklauftemperatur von 31°C, d.h. eine Temperaturspreizung von 4K ausgelegt sein, wohingegen ein Kühlkreis für eine Deckenkühlung eine Vorlauftemperatur von 16°C und eine Rücklauftemperatur von 18°C aufweisen kann, d.h. eine Spreizung von 2K. Es werden deshalb unterschiedliche Massenströme benötigt. Es liegt auf der Hand, dass die Kreiselpumpe für die beiden Betriebsfälle unterschiedlich ausgelegt werden müsste. Denn der Volumenstrom für den Heizbetrieb ist in der Regel deutlich kleiner als der Volumenstrom im Kühlbetrieb. Da dies jedoch nicht möglich ist, wird sie nur für eine Betriebsart ausgelegt, beispielweise für den Kühlbetrieb. Hierzu wird über die benötigte Kühlleistung und eine angenommene Temperaturspreizung ein Auslegungsmassenstrom ermittelt. Für den Heizfall wird eine solche Auslegung nicht vorgenommen. Das führt zu dem Problem, dass für den Heizfall sich die Auslegungsspreizung in der Regel so anpasst, dass sich derselbe Auslegungsmassenstrom wie im Kühlfall einstellt. Das bedeutet, dass die Sollförderhöhe nicht verändert wird und somit unnötige Pumpenenergie verbraucht wird.

Es ist daher Aufgabe der vorliegenden Erfindung, ein Verfahren und eine Kreiselpumpe für ein kombiniertes Heiz- Kühlsystem bereitzustellen, mit dem bzw. der in jeder Betriebsart des kombinierten Heiz-Kühlsystems ein energieeffizienter Betrieb erreicht wird.

Diese Aufgabe wird durch das Verfahren mit den Merkmalen des Anspruchs 1 sowie mit der Kreiselpumpe gemäß Anspruch 14 gelöst. Vorteilhafte Weiterbildungen sind in den Unteransprüchen gegeben.

Erfindungsgemäß wird ein Verfahren zur Steuerung einer drehzahlgeregelten Kreiselpumpe eines kombinierten Heiz-Kühlsystems gemäß Anspruch 1 vorgeschlagen.

Ferner wird eine drehzahlgeregelte Kreiselpumpe für das kombiniertes Heiz-Kühlsystem gemäß Anspruch 14 vorgeschlagen.

Kerngedanke der vorliegenden Anmeldung ist es, die Regelung der Kreiselpumpe, insbesondere ihrer Förderhöhe auf die jeweils vorliegende Betriebsart anzupassen. Dies nimmt die Kreiselpumpe vollkommen selbstständig vor. In diesem Fall ist in die Kreiselpumpe eine Elektronik integriert, die eine Bestimmung und Auswertung der Medientemperatur im Hinblick auf die vorliegende Betriebsart vornimmt, sowie in Abhängigkeit des Ergebnisses die Drehzahlregelung durch Vorgabe einer an die erkannte Betriebsart angepasste Förderhöhe steuert.

Die Einrichtung zur Bestimmung der Temperatur ist einen Temperatursensor, der mit dem Medium in Verbindung steht. Die Einrichtung kann in die Kreiselpumpe vollständig oder teilweise integriert oder extern dazu angeordnet sein. Als Integration ist in diesem Sinne auch eine Variante zu verstehen, bei der die Einrichtung aus einem Messmittel und einer Versorgungselektronik besteht, wobei die Versorgungselektronik Teil der Pumpenelektronik ist und das eigentliche Messmittel außerhalb der Kreiselpumpe angeordnet ist. Das Messmittel kann in dem Pumpengehäuse, dem Saugstutzen oder dem Druckstutzen angeordnet sein.

Geeigneterweise kann auf den Heizbetrieb geschlossen werden, wenn die Temperatur des Mediums eine obere Grenztemperatur überschreitet. Denn für den Heizbetrieb wird das Medium auf eine bestimmte Temperatur erwärmt und dann zu dem zumindest einen Verbraucher gefördert. Die Grenztemperatur kann idealerweise zwischen 28°C und 42°C, insbesondere etwa 30°C betragen.

Ferner kann geeigneterweise auf den Kühlbetrieb geschlossen werden, wenn die Temperatur des Mediums eine untere Grenztemperatur unterschreitet. Denn für den Kühlbetrieb wird das Medium auf eine bestimmte Temperatur herunter gekühlt und dann zu dem zumindest einen Verbraucher gefördert. Die untere Grenztemperatur kann idealerweise zwischen 13°C und 17°C, insbesondere etwa 15°C beträgt.

Gemäß einer bevorzugten Ausführungsvariante handelt es sich bei der ermittelten Temperatur um eine lokale Vorlauftemperatur des zumindest einen Verbrauchers. Zwar kann grundsätzlich auch eine Rücklauftemperatur verwendet werden. Die Vorlauftemperatur hat jedoch den Vorteil, dass die untere und obere Grenztemperatur weiter voneinander entfernt liegen, als es bei der Rücklauftemperatur der Fall wäre, so dass eine höhere Sicherheit für die Bestimmung der richtigen Betriebsart in den Grenztemperaturbereichen besteht.

Die Regelung der Kreiselpumpe erfolgt im Kühlbetrieb entlang einer ersten Kennlinie und im Heizbetrieb entlang einer zweiten Kennlinie, wobei eine Umschaltung auf die entsprechende Kennlinie in Abhängigkeit der ermittelten Betriebsart erfolgt. Die Kreiselpumpe kann dadurch optimal an die jeweilige Betriebsart angepasst werden. Dabei ist der Kennliniensollwert der zweiten Kennlinie kleiner als der Kennliniensollwert der ersten Kennlinie. Hierdurch wird erreicht, dass zumindest im Heizbetrieb Energie eingespart wird.

Erfindungsgemäß wird dem Heizbetrieb und dem Kühlbetrieb daher jeweils eine Regelkennlinie zugeordnet, die nach dem Erkennen der entsprechenden Betriebsart automatisch an der Kreiselpumpe eingestellt wird. Die beiden Regelkennlinien sind jeweils durch eine Sollförderhöhe spezifiziert.

Die erste und/ oder die zweite Kennlinie kann eine Δp-c, eine Δp-v oder eine Δp-cv Kennlinie sein. Bei einer Δp-c Kennlinie hält die Regelung die Förderhöhe über dem zulässigen Förderstrombereich konstant auf dem eingestellten Förderhöhensollwert bzw. dem eingestellten Differenzdrucksollwert. Bei einer Δp-v Kennlinie verändert die Regelung die von der Pumpe einzuhaltende Förderhöhe linear zum Förderstrombereich beispielsweise zwischen einem Kennliniensollwert Hsoll und ½ dieses Kennliniensollwerts 0,5·Hsoll. In der Regelungsart Δp-cv wird die Förderhöhe ab einem bestimmten Förderstromgrenzwert konstant auf dem eingestellten Förderhöhensollwert gehalten. Sinkt der Förderstrom unter den Grenzwert, verändert die Regelung die einzuhaltende Förderhöhe linear zum Förderstrom zwischen dem Förderhöhensollwert Hsoll und ¾ dieses Förderhöhensollwerts. Jede Kennlinie kann demnach durch einen Kennliniensollwert definiert werden. Im Falle einer Δp-c Kennlinie entspricht der Kennliniensollwert demjenigen Förderhöhensollwert, auf dem die Kreiselpumpe konstant gehalten wird. Im Falle einer Δp-v Kennlinie kann die maximale Förderhöhe auf der Kennlinie den Kennliniensollwert darstellen, und im Falle einer Δp-cv Kennlinie kann der Kennliniensollwert demjenigen Förderhöhensollwert entsprechen, der ab dem Grenzwert gehalten wird.

Vorzugsweise bilden die beiden Kennliniensollwerte von Heizbetrieb und Kühlbetrieb ein vorbestimmtes Verhältnis, das in dem Pumpenaggregat oder der zentralen Gebäudeautomation hinterlegt sein kann. Ausgehend von der aktuellen Betriebsart kann die Anpassung der Regelung bei der Umschaltung in die andere Betriebsart anhand dieses Verhältnisses erfolgen. Es muss dann nur noch für eine der beiden Betriebsarten ein Kennliniensollwert vorgegebenen werden, da sich der andere Kennliniensollwert unmittelbar aus dem Verhältnis ergibt. Die Parametrierung der Kreiselpumpe beim Installationsprozess erleichtert sich dadurch.

Beispielsweise liegt das Verhältnis von Kennliniensollwert im Kühlbetrieb zum Kennliniensollwert im Heizbetrieb bei 2:1. Untersuchungen haben gezeigt, dass im Heizbetrieb ein geringerer Förderstroms als im Kühlbetrieb genügt, um den zumindest einen Verbraucher ausreichend zu versorgen. So kann im Falle einer für den Kühlbetrieb ausgelegten Kreiselpumpe, die Sollförderhöhe in einem vorgebbaren Förderhöhenverhältnis zum Heizbetrieb, beispielsweise in einem Verhältnis von 2:1, reduziert werden, wenn der Heizbetrieb vorliegt.

Gemäß einer vorteilhaften Ausführungsvariante kann dann, wenn der Kühlbetrieb ermittelt wird, die Sollförderhöhe der Kreiselpumpe auf einen Wert zwischen 40% und 60% der maximalen Förderhöhe, insbesondere auf 50% der maximalen Förderhöhe reduziert werden. Untersuchungen haben gezeigt, dass eine für den Kühlbetrieb angepasste Kreiselpumpe noch bei 50% der maximalen Förderhöhe den zumindest einen Verbraucher ausreichend mit Kühlleistung versorgen kann.

Alternativ oder in Kombination kann dann, wenn der Heizbetrieb ermittelt wird, die Sollförderhöhe der Kreiselpumpe auf einen Wert zwischen 20% und 30% der maximalen Förderhöhe, insbesondere auf 25% der maximalen Förderhöhe reduziert werden. Untersuchungen haben gezeigt, dass eine für den Kühlbetrieb angepasste Kreiselpumpe derart überdimensioniert ist, dass sie bei 25% der maximalen Förderhöhe den zumindest einen Verbraucher ausreichend mit Heizleistung versorgen kann.

Zur Energieeinsparung kann die Kreiselpumpe ausgeschaltet werden, wenn die Temperatur des Mediums zwischen der unteren und der obere Grenztemperatur liegt. Denn dies ist ein indifferenter Temperaturbereich, in dem weder ein klarer Heizbetrieb noch ein klarer Kühlbetrieb vorliegt. Die Temperatur des Mediums liegt hier im Bereich der Solltemperatur, so dass weder geheizt noch gekühlt werden muss. Damit die Kreiselpumpe in diesem Bereich nicht unnötig Energie verbraucht, kann sie geeigneterweise ausgeschaltet werden.

Vorzugsweise erfolgt das Ausschalten der Kreiselpumpe nur für die Dauer einer ersten Wartezeit, wobei die Kreiselpumpe nach Ablauf der ersten Wartezeit erneut eingeschaltet wird. Damit wird erreicht, dass die Kreiselpumpe automatisch wieder in Betrieb geht, um zu prüfen, ob zwischenzeitlich ein Heiz- oder Kühlbedarf entstanden ist, der einen erneuten längeren Betrieb erforderlich macht. Ist dies nicht der Fall, kann die Kreiselpumpe erneut abgeschaltet werden. Würde sie dagegen nach Ablauf der ersten Wartezeit nicht wieder eingeschaltet, bliebe eine Heiz- oder Kühlanforderung des zumindest einen Verbrauchers unerkannt. Eine solche kann an geöffneten Stellventilen bzw. an dem infolge geöffneter Ventile fließenden Volumenstrom erkannt werden. Das zyklische "Aufwachen" der Kreiselpumpe gewährleistet daher, dass eine Unterversorgung vermieden wird. Beispielsweise kann die erste Wartezeit zwischen 2 Minuten und 10 Minuten, insbesondere ca. 5 Minuten betragen.

Geeigneterweise erfolgt die Ermittlung der Betriebsart nach dem Einschalten der Kreiselpumpe erst nach dem Ablauf einer zweiten Wartezeit. Dies trägt dem Umstand Rechnung, dass die Kreiselpumpe einerseits Zeit benötigt, um hochzufahren, d.h. die die Sollförderhöhe erreichende Drehzahl einzustellen, und es andererseits einige Zeit dauert, bis das aufgeheizte oder gekühlte Medium vom Wärmeerzeuger oder Kälteerzeuger die Messstelle für die Temperaturbestimmung des Mediums, insbesondere die Kreiselpumpe erreicht. Beispielsweise kann die zweite Wartezeit zwischen 30 Sekunden und 2 Minuten, insbesondere ca. 1 Minute betragen.

Von besonderem Vorteil ist es, wenn die Kreiselpumpe während der Ermittlung der Betriebsart mit maximaler Förderhöhe betrieben wird. Denn die Kreiselpumpe war zuvor ausgeschaltet, so dass der Betrieb mit maximaler Förderhöhe dafür sorgt, dass kühles bzw. warmes Medium so schnell wie möglich von dem Wärmeerzeuger oder Kälteerzeuger zur Kreiselpumpe sowie zu dem zumindest einen Verbraucher gelangt.

Um den Förderstrom zu ermitteln, kann die Kreiselpumpe entsprechende Mittel aufweisen. Dabei kann es sich um einen Volumenstromsensor oder eine Berechnungseinheit handeln, die den Volumenstrom aus physikalischen Größen oder Modellgrößen der Kreiselpumpe berechnet. Auch können die Mittel beides umfassen, d.h. einen Volumenstromsensor einerseits und eine Berechnungseinheit andererseits. Dies hat folgenden Vorteil: da ein Volumenstromsensor naturgemäß nicht über den gesamten Volumenstrombereich denselben kleinen Messfehler hat sondern spezielle für einen bestimmen Volumenstrombereich geeignet ist, kann dort, wo er ungeeignet ist, eine Berechnung des Volumenstroms erfolgen. Die Kreiselpumpe kann ferner dazu eingerichtet sein, sich zumindest für eine bestimmte Dauer abzuschalten, wenn der Förderstrom unter einem bestimmten Grenzwert liegt. Des Weiteren Kann die Kreiselpumpe zur Ausführung des beschriebenen Verfahrens eingerichtet sein.

Weitere Vorteile und Merkmale der Erfindung werden nachfolgend anhand von Ausführungsbeispielen und der beigefügten Figuren erläutert. Es zeigen:
- Figur 1:: eine schematische Darstellung eines Verbraucherzweigs eines kombinierten Heiz-Kühlsystems
- Figur 2:: eine schematische Darstellung des Wärme- und Kälteerzeugers des kombinierten Heiz-Kühlsystems
- Figur 3:: ein Signalflussdiagramm eines Algorithmus zur Durchführung des erfindungsgemäßen Verfahrens
- Figur 4:: ein Ablaufdiagramm einer Variante des Verfahrens
- Figur 5:: ein Kurvendiagramm mit gemessenen Verläufen

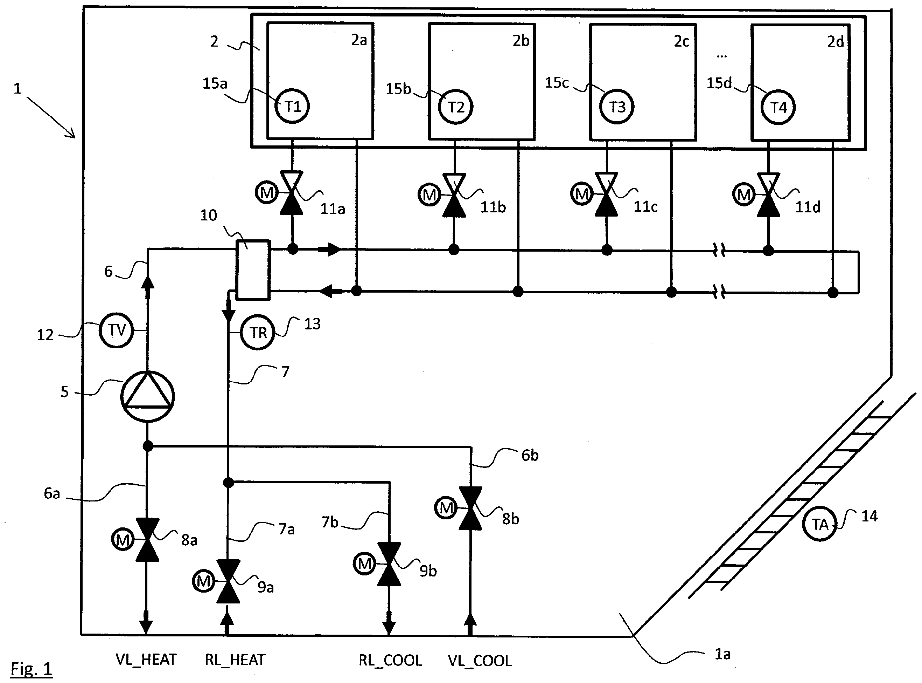

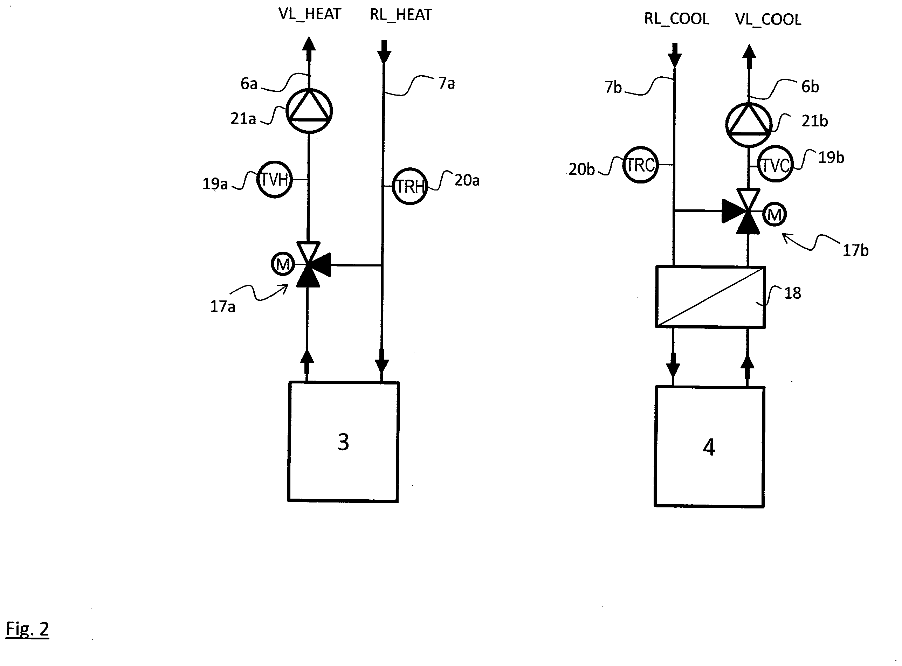

Figur 1 zeigt eine schematische Darstellung eines lokalen Verbraucherzweigs 1a eines kombinierten Heiz-Kühlsystems 1, das alternativ in der Betriebsart "Heizen" und "Kühlen" betrieben werden kann. In Figur 2 ist jeweils der zentrale Wärmeerzeuger 3 und der zentrale Kälteerzeuger 4 des kombinierten Heiz-Kühlsystems 1 dargestellt, an die der Verbraucherkreis 1a nach Figur 1 angeschlossen ist. Dies wird anhand der gleichen Bezeichnungen an den bepfeilten Übergabestellen deutlich. Das Heiz-Kühlsystem 1 kann neben dem in Figur 1 gezeigten Verbraucherzweig 1a zwei oder mehr solcher Verbraucherzweige 1a mit mehr oder auch weniger Verbrauchern 2a-2d aufweisen, die parallel geschaltet und gemeinsam an den zentralen Wärmeerzeuger 3 und den zentralen Kälteerzeuger 4 angeschlossen sind. Der Einfachheit halber ist hier nur ein Verbraucherzweig 1a dargestellt. Sind mehrere Verbraucherzweige vorhanden, kann jeder dieser Verbraucherzweige unabhängig von dem oder den anderen Verbraucherzweigen im Heizbetrieb oder Kühlbetrieb betrieben werden. Somit können alle Betriebsarten in den verschiedenen Verbraucherzweigen zur selben Zeit vorliegen.

Der Verbraucherzweig 1a des kombinierte Heiz-Kühlsystem 1 weist hier beispielhaft mehrerer Verbraucher (Übergabesysteme) 2a, 2b, 2c, 2d in Gestalt von kombinierten Heiz-Kühldecken auf. Gemeinsam bilden die Verbraucher 2a, 2b, 2c, 2d ein Deckensystem 2. Jede der Heiz-Kühldecken ist für die Temperierung eines Raumes zuständig. Hydraulisch sind alle Heiz-Kühldecken 2a, 2b, 2c, 2d parallel geschaltet und mit einer lokalen Vorlaufleitung 6 und eine lokalen Rücklaufleitung 7 über eine hydraulische Weiche 10 verbunden. Dabei ist jede Zone separat mit einem Motorventil 11a bis 11d oder einem anderen Stellventil am Eintritt der Zone ausgestattet. Die Verbindung zur lokalen Vorlaufleitung 6 erfolgt über diese Ventile 11a bis 11d.

Die Heiz-Kühldecken 2a-2d bilden jeweils unabhängig voneinander regelbare bzw. geregelte Zonen, wobei jeder Zone eine eigene Solltemperatur vorgegeben werden kann. In jeder Zone wird zudem die Isttemperatur gemessen. Hierzu dienen Temperaturfühler 15a-15d, die jeweils eine Zonentemperatur T1, T2, T3, T4 erfassen. Ein Zonenregler bestimmt jeweils die Regelabweichung zum jeweiligen Sollwert und stellt das jeweilige Ventil 11a-11d im Vorlauf der jeweiligen Heiz-Kühldecke entsprechend der Regelabweichung ein, um der Zone mehr oder weniger Heiz- oder Kühlleistung zuzuführen. Über die Regelabweichung zwischen der Ist- und der Soll-Temperatur der jeweiligen Zone 2a-2d wird das jeweilige Motorventil 11a-11d automatisch geöffnet und geschlossen, und zwar unabhängig davon, über welche übergeordnete Regelung entschieden wird, welche Betriebsart bei dem Heiz-Kühlsystem eingestellt werden soll.

Eine verbraucherseitige Kreiselpumpe 5 ist im lokalen Vorlauf 6 vor den Verbrauchern 2a-2d angeordnet und fördert ein Medium, beispielsweise Wasser, zu den Verbrauchern 2a-2d im Kreis. Jeder Verbraucherzweig 1a kann eine solche verbraucherseitige Kreiselpumpe 5 aufweisen. Demgegenüber sind in dem zentralen Heizkreis und dem zentralen Kühlkreis nach Figur 2 je eine zentrale Heizungspumpe 21a und eine zentrale Kühlpumpe 21b angeordnet.

Über einen ersten Temperaturfühler 12 wird die Vorlauftemperatur TV vor dem Eintritt in die Decke 2 gemessen, ein zweiter Temperaturfühler13 erfasst die Rücklauftemperatur TR nach dem Austritt aus der Decke 2. Ferner ist ein Außentemperaturfühler 14 vorgesehen, der die Temperatur TA außerhalb des Gebäudes erfasst, in dem das Heiz-Kühlsystem verbaut ist. Da der Temperaturfühler 13 in der Rücklaufleitung 7 und der Außentemperaturfühler 14 für das erfindungsgemäße Verfahren nicht erforderlich sind, können sie auch entfallen. Sie können jedoch zur Leistungsberechnung verwendet werden.

Wie in Figur 1 ferner zu sehen ist, wird über ein Vier-Rohrsystem das Deckensystem 2 mit dem in Figur 2 gezeigten Wärmeerzeuger 3 und dem Kälteerzeuger 4 verbunden. Der Wärmeerzeuger 3 ist über einen zentralen Vorlauf 6a mit dem lokalen Vorlauf 6 und mit einem zentralen Rücklauf 7a mit dem lokalen Rücklauf 7 verbunden. In gleicher Weise ist der Kälteerzeuger 4 über einen zentralen Vorlauf 6b mit dem lokalen Vorlauf 6 und mit einem zentralen Rücklauf 7b mit dem lokalen Rücklauf 7 verbunden. In jeder dieser vier zentralen Leitungen 6a, 6b, 7a, 7b ist ein motorgesteuertes Stellventil 8a, 9a, 8b, 9b angeordnet, mittels welchen den Verbrauchern entweder aufgeheiztes oder gekühltes Medium zugeführt werden kann.

Je nach vorliegender Betriebsart ist nur der Vor- und Rücklauf 6, 7 zu einem der beiden Erzeuger 3, 4 geöffnet. Es sind also entweder die beiden Stellventile 8a, 9a in der zentralen Vor- und Rücklaufleitung 6a, 7a des Wärmeerzeugers 3 oder die beiden Stellventile 8b, 9b in der zentralen Vor- und Rücklaufleitung 6b, 7b des Kälteerzeugers 3 geöffnet.

Neben dem Heizbetrieb und dem Kühlbetrieb kann auch ein Zustand vorliegen, in dem weder geheizt noch gekühlt wird. Dies ist insbesondere dann der Fall, wenn im Falle einer raumtemperaturgeführten Regelung die Regelabweichung zu gering ist. Dieser Zustand wird nachfolgend ebenfalls als eine Betriebsart behandelt und als "AUS" bezeichnet.

Das Heiz-Kühlsystem kann auf zwei verschiedenen Arten geregelt werden. Das erfindungsgemäße Verfahren kann in beiden Arten angewendet werden.

Eine erste Art ist die außentemperaturgeführte Regelung. Dabei wird eine Grenztemperatur für das "Heizen" und eine für das "Kühlen" festgelegt. Für den Heizbetrieb ist die Außentemperatur TA beispielsweise auf 9 °C gesetzt. Sobald die Außentemperatur TA diese Temperatur unterschreitet, wechselt das Heiz-Kühlsystem in die Betriebsart Heizen. Wird im Gegensatz dazu die Außentemperatur TA von 14 °C überschritten, so wird in den Kühlbetrieb gewechselt. Der Temperaturbereich zwischen den beiden festgelegten Grenztemperaturen bildet die Betriebsart "Aus", wobei in den Übergangsbereichen eine Hysterese von beispielsweise 0,5K realisiert ist, um einen zu schnellen Wechsel zwischen den Betriebsarten zu vermeiden.

Eine zweite Regelungsart ist die raumtemperaturgeführte Regelung. Dabei wird die erforderliche Betriebsart über die Summe der Regelabweichungen zwischen Soll- und Ist-Temperatur der vier Zonen 2a-2d bestimmt. Überschreitet die mittlere Regelabweichung den Wert von 1 °C, so wird in die Betriebsart "Kühlen" gewechselt. Umgekehrt wird bei Unterschreiten der mittleren Regelabweichung von -1 °C in die Betriebsart "Heizen" gewechselt. Der Wert 1 °C und der Wert -1 °C ist jeweils über die Gebäudeautomation parametrierbar. Auch bei dieser Regelungsart bildet der Temperaturbereich zwischen den beiden Betriebsarten "Heizen" und "Kühlen" die Betriebsart "Aus", in der ebenfalls eine Hysterese von 0,5K in den Übergangsbereichen vorgesehen ist.

Untersuchungen eines existierenden Heiz-Kühlsystems haben gezeigt, dass eine Reduzierung der Förderhöhe im Kühlfall auf 50 % und im Heizfall sogar auf 25 % möglich ist und die installierten Leistungen noch immer die Lasten abdecken, wobei dies natürlich von der Auslegung des Systems abhängt. Wird aus diesen beiden Förderhöhen ein Förderhöhenverhältnis zwischen dem Heiz- und Kühlfall gebildet, so ergibt sich ein Verhältnis von 1 (Heizfall) zu 2 (Kühlfall). Unter diesen speziellen Förderhöhenanteilen lassen sich so im Kühlfall bis zu 60 % und im Heizfall sogar bis zu 81 % der Pumpenleistung im Vergleich zur Maximalleistung einsparen.

Bei der Betriebsart "Heizen" wird von dem zentralen Heizkreis eine bestimmte Vorlauftemperatur TVH eingestellt. Hierfür wird ein Mischer 17a (Figur 2) verwendet, der abgekühltes Wasser aus dem Rücklauf 7a mit heißem Wasser des Wärmeerzeugers 3 mischt. Um die richtige Vorlauftemperatur TVH zu erreichen, wird diese mittels Temperaturfühler 19a im zentralen Vorlauf 6a gemessen und der Mischer 17a entsprechend der vorliegenden Soll-Istwertabweichung eingestellt. Der Sollwert für die Vorlauftemperatur TVH ist abhängig von der Außentemperatur TA. Die obere Temperatur sollte nicht überschritten werden, da der Strahlungsanteil des Deckensystems 2 sonst zu hoch ist. Die Rücklauftemperatur TRH des zentralen Rücklaufs 7a des Heizkreises stellt sich in Abhängigkeit des Volumenstroms und der Vorlauftemperatur TVH selbständig ein. Die zentrale Rücklauftemperatur TRH im Heizkreis kann mittels eines Fühlers 20a gemessen und überwacht werden.

Der Regelfall eines Heizbetriebes ist derart, dass im Verlauf des Morgens die Ventile 11a-11d einmalig geöffnet und die Raumtemperatur T1, T2, T3 T4 auf die jeweils vorgegebene Solltemperatur erwärmt wird. Dieser einmalige Heizvorgang ist aufgrund der Wärmegewinne im jeweiligen Raum (Wärmeabgabe von Geräten, Mitarbeitern, der Beleuchtung und der sehr gut gedämmten Gebäudehülle) ausreichend, um die Transmissionsverluste und gegebenenfalls Lüftungswärmeverluste auszugleichen. In Ausnahmefällen kann es durch besonders hohe Wärmegewinne sogar zum Kühlbetrieb kurz nach dem Heizvorgang kommen. Es ist ferner ein weiterer Ausnahmefall, dass sich der Verbraucherzweig 1a während des gesamten Tages im Heizbetrieb befindet. Dies kann an sehr kalten Tagen der Fall sein, an denen sich die Außentemperatur TA tagsüber im Minusbereich befindet.

Bei der Betriebsart "Kühlen" wird von dem zentralen Kühlkreis eine bestimmte Vorlauftemperatur TVC eingestellt. Hierfür wird ein Mischer 17b (Figur 2) verwendet, der erwärmtes Wasser aus dem Rücklauf 7b mit kühlem Wasser eines dem Wärmeerzeuger 4 nachgeschalteten Wärmetauschers 18 mischt. Die Vorlauftemperatur TVC liegt geeigneterweise bei etwa 15 °C und sollte aufgrund der Taupunkttemperatur nicht weiter unterschritten werden. Im Vergleich zum Heizbetrieb, ist es beim Kühlbetrieb in der Regel der Fall, dass ab Beginn des Kühlvorgangs im gesamten Tagesverlauf gekühlt werden muss. Dies hängt wieder mit den hohen inneren Lasten (Wärmeabgabe von Geräten, Mitarbeitern, Beleuchtung) zusammen, die im Tagesverlauf aus dem Raum abgeführt werden müssen.

Da der Temperatursensor 12 für den lokalen Vorlauf 6 noch vor den Zonenventilen 11a-11d installiert ist, steht dieser dauerhaft in Kontakt mit dem Kühlmedium aus der Kälteanlage 3 und sieht die lokale Vorlauftemperatur TV von 15°C. Liegt jedoch kein Volumenstrom mehr vor, so strömt kein neues Kühlmedium mehr nach und die Vorlauftemperatur TV erwärmt sich leicht. Die Rücklauftemperatur stellt sich in Abhängigkeit des Volumenstroms zwischen 17 °C und 22 °C ein. Werden die Ventile in den Zonen zum Großteil kurzzeitig zugefahren, so sinkt der Volumenstrom und das wiederum zieht eine Steigung der Rücklauftemperatur nach sich. Der Volumenstrom liegt beispielsweise zwischen 2-3 m³/h.

Das vorab beschriebene Einsparpotential an Pumpenenergie ist abhängig von der Betriebsart, in der sich die Kreiselpumpe 5 gerade befindet. Hierzu muss die Kreiselpumpe 5 selbständig in der Lage sein, die vorliegende Betriebsart zu erkennen. Wie zuvor erläutert wurde, besitzen der Heiz- und der Kühlbetrieb charakteristische Temperaturbereiche, in denen die lokale Vorlauftemperatur TV und die lokale Rücklauftemperatur TR bewegen. Das nachfolgend beschriebene Verfahren ist in einem Algorithmus in der Kreiselpumpe 5 implementiert, über den sie selbständig in der Lage ist, auf die Betriebsart zurückzuschließen und demensprechend ihre Leistung anzupassen oder sich abzuschalten. Dies wird nachfolgend veranschaulicht.

Im Kühlfall wird über den Mischer 17b vor der Kälteanlage 3 eine Auslegungs-Vorlauftemperatur TVC von 15 °C eingestellt. Um dies zu erreichen, dient ein Fühler 19b der Temperaturerfassung TVC im zentralen Vorlauf des Kühlkreises. Ein entsprechender Fühler 20b misst die Temperatur TRC des zentralen Rücklaufs des Kühlkreises. Trotzdem kann es durch Messfehler der Apparaturen in den verschiedenen Einheiten, aber auch durch Verzögerung im Mischverfahren der Vorlauftemperatur TVC zu Schwankungen von ± 2 °C kommen. Aus diesem Grund wird für die Übergangsgrenzen der Vorlauftemperatur im Kühlfall ein Temperaturbereich von 13-17 °C verwendet. Somit wird auf den Kühlbetrieb geschlossen, wenn die Vorlauftemperatur TV eine untere Grenztemperatur Tu von 17 °C unterschreitet.

Für die Grenztemperatur im Heizbetrieb ist ein deutlich höherer Temperaturbereich zu beachten. Eingestellt wird mittels Mischer 17a eine Vorlauftemperatur von 40 °C. Auch hierbei kann es bei dem Mischverfahren kurzeitig zu abweichenden Temperaturen kommen. Zur Vermeidung eines zu schnellen Wechsels aus der Betriebsart "Heizen", wird auch hierbei eine Schwankung von ± 2 °C berücksichtigt. Zusätzlich wird der Temperaturbereich nach unten erweitert, da auch schon bei einer Temperatur über 30 °C geheizt werden kann, wenn auch nicht so effektiv. Somit wird auf den Heizbetrieb geschlossen, wenn die Vorlauftemperatur TV eine obere Grenztemperatur To von 30°C überschreitet.

Der Temperaturbereich zwischen der oberen und der unteren Grenztemperatur, d.h. hier zwischen 17°C und 30°C ist weder dem Heiz- noch dem Kühlbetrieb zugeordnet. Liegt die lokale Vorlauftemperatur in diesem Temperaturbereich, liegt die Betriebsart "Aus" vor. Die Pumpe 5 wird dann ausgeschaltet.

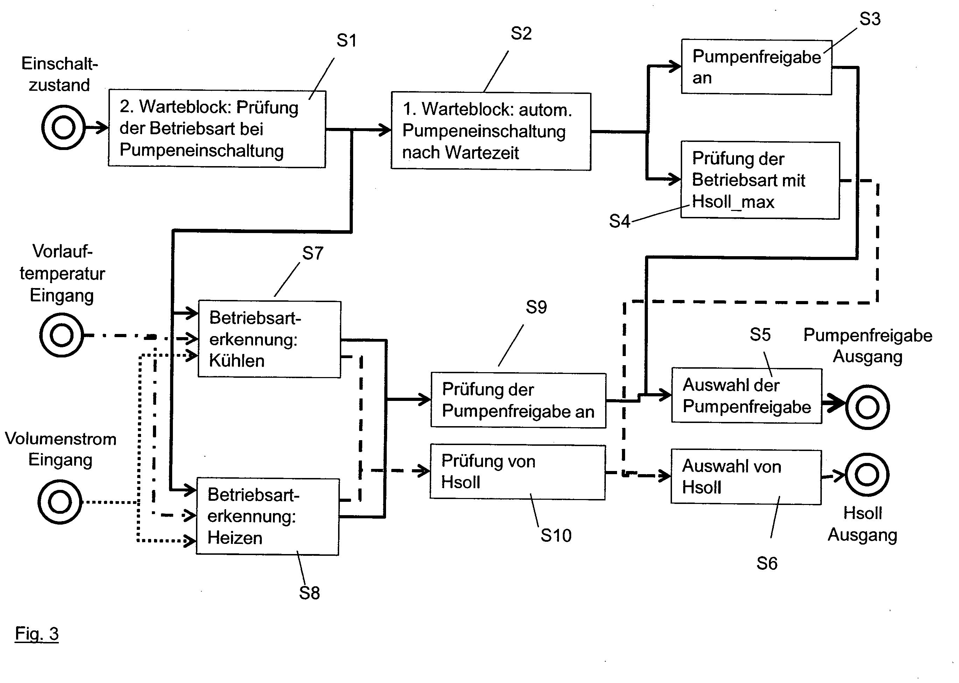

Figur 3 zeigt ein Signalflussdiagramm UML-Darstellung eines Algorithmus, der zur Ausführung des erfindungsgemäßen Verfahrens eingerichtet ist.

Als Eingangsgrößen stehen dem Algorithmus die lokale Vorlauftemperatur TV, der Volumenstrom der Pumpe 5 sowie der Einschaltzustand der Pumpe zur Verfügung, letzterer kann nur die Zustände Pumpe an/ aus annehmen. Über diese Eingangsgrößen ist der Algorithmus in der Lage, die Betriebsart zu bestimmen und darüber die Ausgangsgrößen festzulegen. Dabei gibt es die zwei Ausgangsgrößen "Sollförderhöhe" und "Pumpenfreigabe". Mit der Sollförderhöhe wird der Sollwert für die Förderhöhe der Kreiselpumpe 5 festgelegt. Bei der Pumpenfreigabe handelt es sich um das Freigabesignal, das an die Kreiselpumpe 5 gesendet wird, um diese ein- oder auszuschalten. Es nimmt -wie der Einschaltzustand- nur die Werte "ein" und "aus" an.

Mit der Auswertung des Einschaltzustands wird sichergegangen, dass die Pumpe 5 tatsächlich "an" beziehungsweise "ausgeschaltet" wurde.

Im ersten Schritt des Algorithmus wird der Einschaltzustand am Eingang überprüft. Ist dieses Signal wahr (Pumpe an), erfolgt die Bestimmung der Betriebsart S7, S8. Ist es falsch (Pumpe aus), wird ein erster Warteblock S2 für die automatische Pumpeneinschaltung S3, S4 aktiviert.

Zu Beginn des Algorithmus befindet sich der Einschaltzustand auf "aus" und somit wird der erste Warteblock S2 für die automatische Pumpeneinschaltung aktiviert. Ein der Betriebsartbestimmung S7, S8 vorgeschalteter zweiter Warteblock S1 wird zu Beginn des Verfahrens übersprungen, weil die Pumpe 5 zunächst abgeschaltet ist. Der erste Warteblock S2 sieht vor, dass für die Dauer einer ersten Wartezeit T1 nichts passiert. Die erste Wartezeit T1 beträgt beispielhaft 5 Minuten, kann jedoch manuell oder automatisch verändert werden. Hierzu ist sie als Parameter in dem Algorithmus hinterlegt. Es ist sinnvoll, die Wartezeit für den Nachtbetrieb hochzusetzen, beispielsweise auf 15min, damit der Algorithmus nicht zu häufig in die Betriebsartprüfung wechselt.

Während des Warteblocks S2 "schläft" die Kreiselpumpe 5 quasi und verbraucht somit keine Energie. Sie liefert aus diesem Grunde keinen Förderstrom und kann nicht mitbekommen, wenn sich die Betriebsart ändert oder eine Heiz- oder Kühlanforderung in Gestalt sich öffnender Ventile 11a-11d vorliegt. Dennoch muss die Kreiselpumpe 5 in Abständen wieder aktiviert werden, um herauszufinden, ob eine Heiz- oder Kühlanforderung vorliegt oder die Betriebsart umgeschaltet wurde, und um die Anforderung zu bedienen.

Nach Ablauf der ersten Wartezeit T1 wird über den Algorithmus die Pumpenfreigabe auf "an" gesetzt, Block S3, und die Sollförderhöhe 100 % eingestellt, Block S4. Hierbei wurde die maximale Förderhöhe zur Überprüfung der Betriebsart eingestellt. Bei maximaler Förderhöhe stellt sich der maximale Volumenstrom ein und so wird überprüft, ob ein Volumenstrom vorliegt. Zusätzlich erfolgt die Beimischung der Vorlauftemperatur schneller. Bevor die beiden Signale "Pumpenfreigabe" und "Sollförderhöhe" den Algorithmus verlassen, werden diese mit einer aus der Betriebsartbestimmung S7, S8 kommenden Sollförderhöhe und einer daraus ebenfalls stammenden Pumpenfreigabe, welche allenfalls "Pumpe aus" sein kann, jeweils vereint, Blöcke S5, S6.

Hierbei ist der Algorithmus so aufgebaut, dass zu einem Zeitpunkt nur eine Förderhöhe vorliegen kann. Hierzu wird in Block S6 die Förderhöhe ausgewählt. Denn aus der Betriebsartprüfung und dem ersten Warteblock kommen unterschiedliche Förderhöhen in dem Block S6 an. Durch die unterschiedlichen Temperaturgrenzbereiche und das Freigabesignal können zu einem Zeitpunkt nur die Förderhöhensollwerte 100 % und 0 %, 50 % und 0 %, 25 % und 0 % oder 0 % und 0 % aus den Blöcken S4 bzw. S7 oder S8 vorliegen. Dabei wird für die Förderhöhe immer der höhere Wert aus den beiden vorliegenden Werten angenommen. Bei der Pumpenfreigabe liegt die höhere Priorität bei dem Pumpenfreigabewert "an". Die beiden Signale für die Pumpenfreigabe sind also lediglich verodert.

Liegt nun am Eingang des Algorithmus für den Einschaltzustand der Kreiselpumpe 5 das Signal "an" an, so wird als erstes der zweite Warteblock S1 aktiviert.

Auch in diesem zweiten Warteblock S1 ist die Wartezeit T2 als Parameter eingebaut und kann individuell eingestellt werden. Die voreingestellte zweite Wartezeit T2 beträgt 1 Minute, kann jedoch auch deutlich weniger betragen. Diese Überprüfung kann geeigneterweise zusätzlich zu der zweiten Wartezeit verzögert werden, beispielweise zwischen 3 und 30 Sekunden da ein Zeitunterschied zwischen dem Pumpenfreigabesignal zur Pumpe 5 und der Rückmeldung des Einschaltzustands der Pumpe 5 besteht. Würde dieser Block S1 wegfallen, so würde der Algorithmus unmittelbar nach der Pumpenanschaltung in S3, S5 in die Betriebsartbestimmung S7, S8 wechseln und die Pumpe 5unmittelbar danach wieder abschalten, weil die Betriebsartbestimmung noch keinen Volumenstrom detektiert. Das liegt daran, dass durch die Verzögerung in der Pumpe 5 in so kurzer Zeit noch kein Volumenstrom vorliegen kann.

Durch die zweite Wartezeit T2 wird sichergestellt, dass sich ein möglicher Volumenstrom und die richtige Vorlauftemperatur einstellen können. Nach Ablauf der zweiten Wartezeit gelangt der Algorithmus in die beiden Blöcke S7, S8 zur Bestimmung der Betriebsart. Der erste Block S7 ist für die Erkennung der Betriebsart "Kühlen", der zweite Block S8 für die Erkennung der Betriebsart "Heizen". Aufgrund der unterschiedlichen Grenztemperaturen Tu, To für die lokale Vorlauftemperatur TV, kann zu einem bestimmten Zeitpunkt nur einer der beiden Blöcke S7, S8 aktiv sein. Dies wird dadurch erreicht, dass das Signal der Vorlauftemperatur in beide Blöcke S7, S8 geht. Da jeder Block S7, S8 einen eigenen Temperaturbereich berücksichtigt, und sich diese auch nicht überschneiden, kann zu einem Zeitpunkt nur einer der beiden Blöcke S7, S8 aktiv sein, oder keiner von beiden.

Im Anschluss führen aus jedem der beiden Blöcke S7, S8 eine Pumpenfreigabe, sowie ein Sollförderhöhe in %. Für die Betriebsart "Heizen" wird eine Sollförderhöhe von 25 % und für die Betriebsart "Kühlen" eine Sollförderhöhe von 50 % ausgegeben. Da diese beiden Förderhöhen für verschiedene Gebäudetypen unterschiedlich sein können, sind sie ebenfalls als vorgebbarer Parameter in dem Algorithmus implementiert. Das Verhältnis von 1 (Heizfall) zu 2 (Kühlfall) kann jedoch in der Regel übernommen werden, wenn die Förderhöhe für den Kühlfall ausgelegt wurde.

Diese beiden Signale "Pumpenfreigabe" und die beiden Signale "Sollförderhöhe" aus den Blöcken S7 und S8 werden in den darauffolgenden Blöcken S9, S10 daraufhin geprüft, ob eine der beiden Betriebsartprüfungen in den Blöcken S7 und S8 eine Betriebsart erkannt hat. Je nachdem welche Betriebsart festgestellt wurde, wird eine bestimmte Förderhöhe in Block S10 und eine bestimmte Pumpenfreigabe in Block S9 vergeben. Für die Pumpenfreigabe hat das Signal "an" dabei die höhere Priorität. Die beiden Signale für die Pumpenfreigabe werden also auch in Block S9 lediglich verodert.

Die beiden aus den Prüfblöcken S9, S10 kommenden Signale werden erneut weitergeleitet und nun mit den Signalen für die Sollförderhöhe aus Block S4 und die Pumpenfreigabe aus Block S3 nach der automatischen Pumpeneinschaltung verbunden. Dies erfolgt in den Blöcken S5, und S6. Auch in Block S6 kann zu einem Zeitpunkt nur eine Sollförderhöhe vorliegen, das wie zuvor beschrieben, gewährleistet wird. Bei der Pumpenfreigabe gilt auch hier die Priorität auf dem "an" Signal. Die aus den Blöcken S5 und S6 kommenden Endsignale für die Pumpenfreigabe und Sollförderhöhe bilden die Ausgänge des Algorithmus.

Würde die Pumpenfreigabe eine Abschaltung der Pumpe bewirken, so schließe sich der erste Warteblock S2 und anschließend die automatische Pumpeneinschaltung an. Es folgt dann der zweite Warteblock S1 und die Bestimmung der Betriebsart S7, S8.

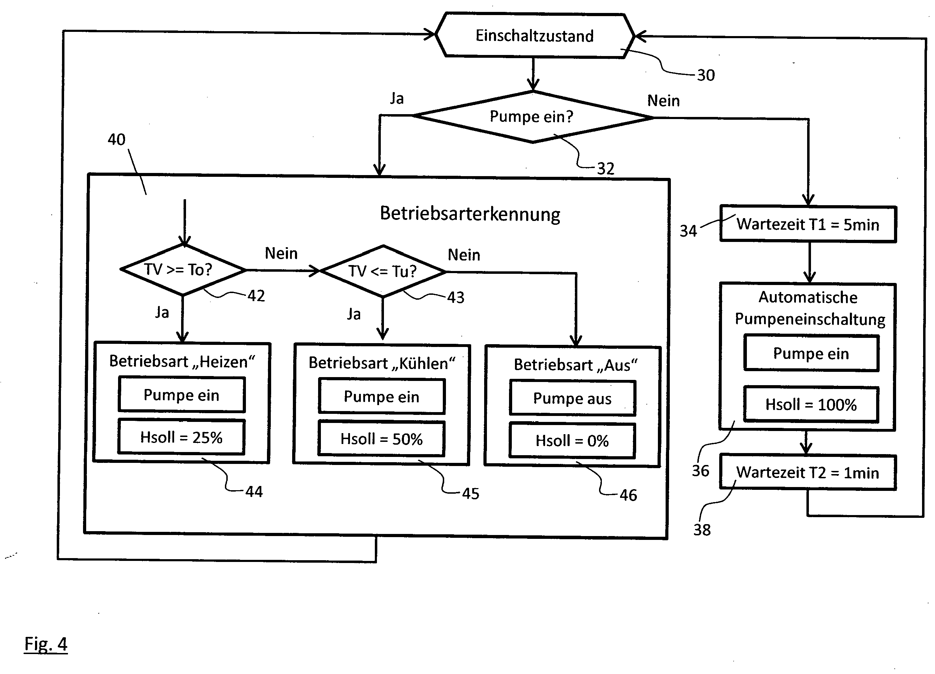

Figur 4 zeigt ein Ablaufdiagramm, das den schrittweisen Ablauf des erfindungsgemäßen Verfahrens veranschaulicht. Da sich der Verfahrensablauf in einzelnen Punkten unterscheidet, stellt Figur 4 in Teilen eine alternative Verfahrensvariante zu dem Signalflussdiagramm in Figur 3 dar.

Das Verfahren gemäß Figur 4 geht von dem Einschaltzustand aus, Block 30, der bei dem Algorithmus nach Figur 3 Eingangsgröße ist. In der Fallunterscheidung 32 findet zunächst eine Überprüfung des Einschaltzustandes dahingehend statt, ob die Kreiselpumpe 5 eingeschaltet ist. Zu Beginn des Verfahrens ist dies nicht der Fall, so dass mit dem Warteblock 34 fortgefahren wird, der dem Block S2 in Figur 3 entspricht. Das Verfahren wartet dann eine eingestellte erste Wartezeit T1, die hier ebenfalls mit 5 Minuten angesetzt ist, und fährt dann mit der automatischen Pumpeneinstellung in Block 36 fort. Auch hier kann die erste Wartezeit auch deutlich kürzer als 5 Minuten sein.

Bei der automatischen Pumpeneinstellung 36 wird die Kreiselpumpe 5 eingeschaltet. Dies entspricht -analog zur Figur 3- dem Setzen des Parameters "Pumpenfreigabe" auf den Zustand "an", was in Block S3 in Figur 3 erfolgt. Zusätzlich wird bei der automatischen Pumpeneinschaltung 36 die Sollförderhöhe der Kreiselpumpe 5 auf die maximale Förderhöhe gesetzt (Hsoll = 100%Hmax). Das Verfahren wird dann am Anfang fortgesetzt, d.h. bei dem den Einschaltzustand angebenden Block 30.

In Folge der automatischen Pumpeneinschaltung 36 fährt die Kreiselpumpe 5 hoch und meldet ihren Einschaltzustand zurück, so dass der Parameter "Einschaltzustand" seinen Wert auf "ein" ändert. Da dies nicht unmittelbar erfolgt, darf nicht unmittelbar nach der automatischen Pumpeneinschaltung 36 mit der Abfrage des Einschaltzustandes in Schritt 32 fortgefahren werden. Denn dies hätte zur Folge, dass der Einschaltzustand sich möglicherweise noch nicht geändert hat und erneut der Nein-Zweig der Fallunterscheidung 32 hin zum ersten Warteblock 34 durchlaufen wird. Um zu gewährleisten, dass die Pumpe 5 hochfährt, ist deshalb der zweite Warteblock 38 vorhanden, der ein zweite Wartezeit T2 von einer Minute oder deutlich weniger, wie bei dem Algorithmus nach Figur 3, besitzt. Der zweite Warteblock 38 entspricht dem Warteblock S1 in Figur 3. Wie zuvor beschrieben, können die erste und zweite Wartezeit T1, T2 verändert werden, insbesondere manuell oder automatisch.

Nach Ablauf der zweiten Wartezeit T2 ist gewährleistet, dass sich der Einschaltzustand der Pumpe auf "ein" geändert hat, so dass die Fallunterscheidung 32 in den Ja-Zweig führt, wo sich die erfindungsgemäße Betriebsarterkennung 40 anschließt.

Die Betriebsarterkennung führt zu der Feststellung, ob die Betriebsart "Heizen", Block 44, oder die Betriebsart "Kühlen", Block 45, vorliegt oder ob die Pumpe mangels eindeutigem Heiz- oder Kühlbetrieb zur Energieeinsparung ausgeschaltet werden kann, Block 46 Betriebsart "Aus". Nach der Betriebsarterkennung wird das Verfahren wieder bei Block 30 fortgesetzt, d.h. wiederholt.

Wurde die Betriebsart "Aus" festgestellt, erfolgt eine Abschaltung der Pumpe 5, indem die Pumpenfreigabe auf "aus" gesetzt wird. Der von der Pumpe 5 rückgemeldete Einschaltzustand ändert sich dadurch natürlich. Da das Ausschalten der Pumpe relativ schnell erfolgt, muss hier keine Wartezeit abgewartet werden, um zu verhindern, dass das Verfahren erneut in die Betriebsarterkennung 40 einsteigt. Vielmehr wird nach dem Ausschalten der Pumpe (Pumpenfreigabe aus) sofort der Einschaltzustand auf "aus" gewechselt, so dass die Fallunterscheidung 32 in den Nein-Zweig führt. Sollte die Änderung des "Einschaltzustands" nicht schnell erfolgen, so kann der zweite Warteblock 38 vor die Fallunterscheidung 42 gesetzt werden. Dies bewirkt, dass sowohl beim Einschalten als auch beim Ausschalten der Kreiselpumpe 5 die zweite Wartezeit T2 abgewartet wird, bis das Verfahren fortgesetzt wird.

Die Betriebsarterkennung 40 kann wie folgt implementiert werden. Zunächst folgt eine Überprüfung der Vorlauftemperatur TV. Hierzu wird in einer Fallunterscheidung 42 geprüft, ob die Vorlauftemperatur TV größer gleich einer oberen Grenztemperatur To ist, die hier beispielhaft 30°C beträgt. Ist dies der Fall, liegt Heizbetrieb vor, Block 44. Die Pumpe 5 bleibt dann eingeschaltet, ihre Sollförderhöhe Hsoll wird jedoch auf 25% der maximalen Förderhöhe Hmax der Kreiselpumpe 5 eingestellt, um Energie zu sparen.

Ist die Vorlauftemperatur TV nicht größer oder gleich der oberen Grenztemperatur To, schließt sich in dem Verfahren eine weitere Fallunterscheidung 43 an, in der geprüft wird, ob die Vorlauftemperatur TV kleiner gleich einer unteren Grenztemperatur Tu ist, die hier beispielhaft 17°C beträgt. Ist dies der Fall, liegt Kühlbetrieb vor, Block 45. Die Pumpe bleibt dann ebenfalls weiterhin eingeschaltet, jedoch wird ihre Sollförderhöhe Hsoll auf 50% der maximalen Förderhöhe Hmax der Kreiselpumpe 5 eingestellt.

Ist die Vorlauftemperatur TV nicht kleiner oder gleich der unteren Grenztemperatur Tu, so ergibt sich in Verbindung mit der vorherigen Abfrage in Schritt 42, dass die Vorlauftemperatur TV offensichtlich zwischen der unteren Grenztemperatur Tu und der oberen Grenztemperatur To liegt. Wie zuvor erläutert, ist in diesem Fall weder ein Kühlen noch ein Heizen erforderlich bzw. vorliegend, so dass in die Betriebsart "Aus", Block 46, gewechselt wird.

Es sei an dieser Stelle angemerkt, dass die Schrittfolge der Betriebsarterkennung 40 in Figur 4 rein beispielhaft zu verstehen ist. Die Temperaturvergleiche 42, 43 können auch in einer anderen Reihenfolge erfolgen, ohne von dem erfindungsgemäßen Gedanken abzuweichen. So kann beispielsweise die Abfrage des Unterschreitens der unteren Grenztemperatur Tu vor der Abfrage des Überschreitens der oberen Grenztemperatur To erfolgen. Ferner ist auch zu beachten, dass die angegebenen Sollförderhöhen für den Heizbetrieb und den Kühlbetrieb hier rein beispielhaft zu verstehen sind. Je nach Heiz-Kühlsystem können auch andere Sollförderhöhen sinnvoll sein.

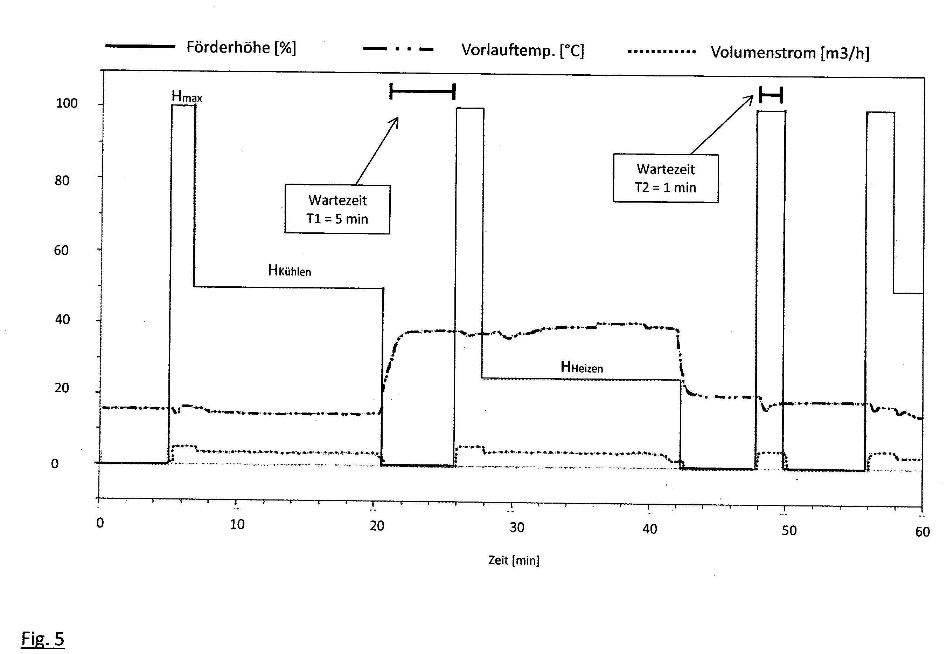

Figur 5 zeigt ein Diagramm mit Kurven für die Förderhöhe, die Vorlauftemperatur TV, den Förderstrom und die Pumpenfreigabe, die die Betriebsart erkennen lassen. Die Kurven wurden im Betrieb des Algorithmus bzw. des Verfahrens aufgenommen. Vor Beginn des Messversuchs befinden sich die Heiz-/Kühldecken 2a, 2b, 2c, 2d im Kühlbetrieb. Aus diesem Grund liegt die Vorlauftemperatur TV zu Beginn des Messversuchs bei 15 °C. Der Algorithmus startet jedoch erst mit dem zweiten Warteblock für die automatische Pumpeneinschaltung, der 5 Minuten andauert. Nach Ablauf der ersten Wartezeit T1 = 5min wird die Pumpenfreigabe auf "an" und der Förderhöhensollwert auf Maximum gesetzt. Dies erfolgt für die Dauer T2 von einer Minute. Es findet dann die Überprüfung der Betriebsart statt. Durch die Überprüfung wird die Betriebsart "Kühlen" erkannt und die Pumpenregelung wechselt in den Kühlbetrieb. Die Förderhöhe Hsoll wird dabei auf 50 % der Maximalförderhöhe gesenkt.

Nach über 10 minütigem unveränderten Kühlbetrieb werden die Raumsolltemperaturen der Zonen 2a, 2b, 2c, 2d erhöht und die Heiz-/Kühldecken wechseln in den Heizbetrieb. Mit dem Anstieg der Vorlauftemperatur TV über die obere Grenztemperatur erkennt der Algorithmus, dass sich das Deckensystem 2 nicht mehr im Kühlbetrieb befindet und die Pumpe 5 wird abgeschaltet bzw. schaltet sich selbst ab.

Es wird erneut die zweite Wartezeit T2 nach der Pumpenabschaltung von 5 Minuten abgewartet und dann die Betriebsart überprüft. Die Überprüfung ergibt, dass die Heiz-/Kühldecken 2a, 2b, 2c, 2d sich im Heizbetrieb befinden, und die Pumpenregelung wechselt in den Heizbetrieb. Die Förderhöhe wird über den Algorithmus auf 25 % der Maximalförderhöhe gesenkt.

Im letzten Teil wird die Betriebsart erneut von "Heizen" auf "Kühlen" zurückgestellt, indem geringere Solltemperaturen für die Zonen 2a, 2b, 2c, 2d vorgegeben werden. Der Ablauf mit automatischer Pumpeneinschaltung und der Betriebsartprüfung finden erneut statt.

Figur 5 zeigt, dass es mit dem Verfahren möglich ist, durch die Vorlauftemperatur die Betriebsart des Verbraucherzweigs 1a zu erkennen und so die Förderhöhe der verbraucherseitigen Kreiselpumpe 5 automatisch anzupassen. Darüber hinaus kann mit Hilfe des Verfahrens die Pumpe 5 bei Erkennung der Betriebsart "Aus" abgeschaltet werden und nach einer Wartezeit den Betrieb wieder aufnehmen.

### Bezugszeichenliste

- 1: kombiniertes Heiz-Kühlsystem
- 1a: Verbraucherzweig
- 2: Deckensystem
- 2a, 2b, 2c, 2d: Heiz-Kühldecke
- 3: Wärmeerzeuger
- 4: Kälteerzeuger
- 5: verbraucherseitige Kreiselpumpe
- 6: lokaler Vorlaufstrang
- 6a: zentraler Vorlaufstrang Heizkreis
- 6b: zentraler Vorlaufstrang Kühlkreis
- 7: lokaler Rücklaufstrang
- 7a: zentraler Rücklaufstrang Heizkreis
- 7b: zentraler Rücklaufstrang Kühlkreis
- 8a: heizvorlaufseitiges Motorventil
- 8b: kühlvorlaufseitiges Motorventil
- 9a: heizrücklaufseitiges Motorventil
- 9b: kühlrücklaufseitiges Motorventil
- 10: hydraulische Weiche
- 11a, 11b, 11c, 11d: zonenseitiges Motorventil
- 12: lokaler Vorlauftemperaturfühler
- 13: lokaler Rücklauftemperaturfühler
- 14: Außentemperaturfühler
- 15, 15a, 15b, 15c: Zonentemperaturfühler
- 17a: wärmeerzeugerseitiger 3-Wege Mischer
- 17b: kälteerzeugerseitiger 3-Wege Mischer
- 18: Wärmetauscher, hydraulische Weiche
- 19a: zentraler Vorlauftemperaturfühler im Heizkreis
- 19b: zentraler Vorlauftemperaturfühler im Kühlkreis
- 20a: zentraler Rücklauftemperaturfühler im Heizkreis
- 20b: zentraler Rücklauftemperaturfühler im Kühlkreis
- 21a: zentrale Heizungspumpe
- 21b: zentrale Kühlpumpe
- 30: Parameter "Einschaltzustand"
- 32: Fallunterscheidung "Pumpe eingeschaltet?"
- 34: erster Warteblock
- 36: automatische Pumpeneinschaltung
- 38: zweiter Warteblock
- 40: Betriebsarterkennung
- 42: Prüfung auf Heizbetrieb
- 43: Prüfung auf Kühlbetrieb
- 44: Einstellung der Pumpe für Heizbetrieb
- 45: Einstellung der Pumpe für Kühlbetrieb
- 46: Ausschalten der Pumpe

## Patentansprüche

1. Verfahren zur Steuerung einer drehzahlgeregelten Kreiselpumpe (5) eines kombinierten Heiz-Kühlsystems (1), das in einem Heizbetrieb und in einem Kühlbetrieb betrieben werden kann und das zumindest einen Verbraucher (2, 2a-2d) umfasst, zu dem die Kreiselpumpe (5) ein Medium von einem zentralen Wärme- oder Kälteerzeuger (3, 4) fördert, **dadurch gekennzeichnet, dass** die Kreiselpumpe (5) aus einer Temperatur (TV, TR) des Mediums die Betriebsart des Heiz-Kühlsystems (1) ermittelt und ihre Regelung in Abhängigkeit der ermittelten Betriebsart anpasst, wobei die Regelung der Kreiselpumpe (5) im Kühlbetrieb mit einer ersten Kennlinie und im Heizbetrieb mit einer zweiten Kennlinie erfolgt und der Kennliniensollwert der zweiten Kennlinie kleiner als der Kennliniensollwert der ersten Kennlinie ist, und wobei eine Umschaltung auf die entsprechende Kennlinie in Abhängigkeit der ermittelten Betriebsart erfolgt.

2. Verfahren nach Anspruch 1, **dadurch gekennzeichnet, dass** auf den Heizbetrieb geschlossen wird, wenn die Temperatur (TV, TR) des Mediums eine obere Grenztemperatur (To) überschreitet.

3. Verfahren nach Anspruch 2, **dadurch gekennzeichnet, dass** die obere Grenztemperatur (To) zwischen 28°C und 32°C, insbesondere etwa 30°C beträgt.

4. Verfahren nach einem der vorherigen Ansprüche, **dadurch gekennzeichnet, dass** auf den Kühlbetrieb geschlossen wird, wenn die Temperatur (TV, TR) des Mediums eine untere Grenztemperatur (Tu) unterschreitet.

5. Verfahren nach einem der vorherigen Ansprüche, **dadurch gekennzeichnet, dass** die Temperatur eine lokale Vorlauftemperatur (TV) oder Rücklauftemperatur (TR) des zumindest einen Verbrauchers (2, 2a-2d) ist.

6. Verfahren nach Anspruch 4 oder 5, **dadurch gekennzeichnet, dass** die untere Grenztemperatur (Tu) im Falle der Vorlauftemperatur (TV) zwischen 13°C und 17°C, insbesondere etwa 15°C beträgt.

7. Verfahren nach einem der vorherigen Ansprüche, **dadurch gekennzeichnet, dass** wenn der Kühlbetrieb ermittelt wird, die Sollförderhöhe der Kreiselpumpe (5) auf einen Wert zwischen 40% und 60% der maximalen Förderhöhe, insbesondere auf 50% der maximalen Förderhöhe reduziert wird.

8. Verfahren nach einem der vorherigen Ansprüche, **dadurch gekennzeichnet, dass** wenn der Heizbetrieb ermittelt wird, die Sollförderhöhe der Kreiselpumpe (5) auf einen Wert zwischen 20% und 30% der maximalen Förderhöhe, insbesondere auf 25% der maximalen Förderhöhe reduziert wird.

9. Verfahren nach einem der vorherigen Ansprüche, **dadurch gekennzeichnet, dass** im Falle einer für den Kühlbetrieb ausgelegten Kreiselpumpe (5), die Sollförderhöhe in einem vorgebbaren Förderhöhenverhältnis zum Heizbetrieb, insbesondere im Verhältnis von 2:1 reduziert wird, wenn der Heizbetrieb ermittelt wird.

10. Verfahren nach einem auf einen der Ansprüche 2 oder 3 rückbezogenen Ansprüche 4 oder 5, **dadurch gekennzeichnet, dass** die Kreiselpumpe (5) ausgeschaltet wird, wenn die Temperatur (TV, TR) des Mediums zwischen der unteren und der obere Grenztemperatur (To, Tu) liegt.

11. Verfahren nach Anspruch 10, **dadurch gekennzeichnet, dass** das Ausschalten der Kreiselpumpe (5) für die Dauer einer ersten Wartezeit erfolgt und die Kreiselpumpe (5) nach Ablauf der ersten Wartezeit (T1) erneut eingeschaltet wird.

12. Verfahren nach einem der Ansprüche, **dadurch gekennzeichnet, dass** die Ermittlung der Betriebsart nach dem Einschalten der Kreiselpumpe (5) erst nach dem Ablauf einer zweiten Wartezeit (T2) erfolgt.

13. Verfahren nach einem der vorherigen Ansprüche, **dadurch gekennzeichnet, dass** die Kreiselpumpe (5) während der Ermittlung der Betriebsart mit maximaler Förderhöhe betrieben wird.

14. Drehzahlgeregelte Kreiselpumpe (5) für ein kombiniertes Heiz-Kühfsystem (1), das in einem Heizbetrieb und in einem Kühlbetrieb betreibbar ist, **dadurch gekennzeichnet, dass** sie eine Einrichtung (12) zur Messung der Temperatur (TV) des von ihr geförderten Mediums aufweist und dazu eingerichtet ist, aus dieser Temperatur (TV, TR) die Betriebsart des Heiz-Kühlsystems (1) zu ermitteln und ihre Regelung in Abhängigkeit der ermittelten Betriebsart selbsttätig anzupassen, wobei die Regelung der Kreiselpumpe (5) im Kühlbetrieb mit einer ersten Kennlinie und im Heizbetrieb mit einer zweiten Kennlinie erfolgt und der Kennliniensollwert der zweiten Kennlinie kleiner als der Kennliniensollwert der ersten Kennlinie ist, und wobei die Einrichtung (12) dazu eingerichtet ist, eine Umschaltung auf die entsprechende Kennlinie in Abhängigkeit der ermittelten Betriebsart vorzunehmen.

15. Kreiselpumpe nach Anspruch 14, **dadurch gekennzeichnet, dass** sie Mittel zur Bestimmung ihres Förderstroms aufweist und dazu eingerichtet ist, sich zumindest für eine bestimmte Dauer abzuschalten, wenn der Förderstrom unter einem bestimmten Grenzwert liegt.

16. Kreiselpumpe nach Anspruch 14 oder 15, **dadurch gekennzeichnet, dass** sie zur Ausführung des Verfahrens nach einem der Ansprüche 1 bis 13 eingerichtet ist.

## Claims

1. Procedure for controlling a speed-controlled rotary pump (5) of a combined heating and cooling system (1) that can be operated in a heating mode and a cooling mode and encompasses at least one load (2, 2a-2d) supplied by a rotary pump (5) with a medium from a central heating or cooling generator (3, 4), **characterised by** the rotary pump (5) determining the operating mode of the heating and cooling system (1) based on a temperature (TV, TR) of the medium and adapting its control depending on the determined operating mode, in which control of the rotary pump (5) is realised with a first characteristic curve in cooling mode and with a second characteristic curve in heating mode, and the characteristic curve set value of the second characteristic curve is less than the characteristic curve set value of the first characteristic curve, and in which switching to the corresponding characteristic curve takes place depending on the determined operating mode.

2. Procedure according to claim 1, **characterised by** heating mode being determined when the temperature (TV, TR) of the medium exceeds an upper temperature limit (To).

3. Procedure according to claim 2, **characterised by** the upper temperature limit (To) being between 28°C and 32°C, in particular approximately 30°C.

4. Procedure according to one of the preceding claims, **characterised by** cooling mode being determined when the temperature (TV, TR) of the medium falls below a lower temperature limit (Tu).

5. Procedure according to one of the preceding claims, **characterised by** the temperature being a local supply temperature (TV) or return temperature (TR) of at least one load (2, 2a-2d).

6. Procedure according to claim 4 or 5, **characterised by** the lower temperature limit (Tu) in case of the supply temperature being between 13°C and 17°C, in particular approximately 15°C.

7. Procedure according to one of the preceding claims, **characterised by** the nominal pumping head of the rotary pump (5) being reduced to a value between 40% and 60% of the maximum pumping head, in particular 50% of the maximum pumping head, when cooling mode is determined.

8. Procedure according to one of the preceding claims, **characterised by** the nominal pumping head of the rotary pump (5) being reduced to a value between 20% and 30% of the maximum pumping head, in particular 25% of the maximum pumping head, when heating mode is determined.

9. Procedure according to one of the preceding claims, **characterised by** the nominal pumping head of a rotary pump (5) designed for cooling mode being reduced at a configurable nominal pumping head ratio for heating mode, in particular a ratio of 2:1, when heating mode is determined.

10. Procedure to one of the claims 4 or 5 referring back to claim 2 or 3, **characterised by** the rotary pump (5) being switched off when the temperature (TV, TR) of the medium is between the lower and upper temperature limits (To, Tu).

11. Procedure according to claim 10, **characterised by** switching off the rotary pump (5) taking place for the duration of a first wait time and the rotary pump (5) only being switched on again after the end of the first wait time (T1).

12. Procedure according to one of the claims, **characterised by** the determination of the operating mode after switching on the rotary pump (5) only taking place after the end of a second wait time (T2).

13. Procedure according to one of the preceding claims, **characterised by** the rotary pump (5) being operated with the maximum pumping head during determination of the operating mode.

14. Speed-controlled rotary pump (5) for a combined heating and cooling system (1) that can be operated in a heating mode and a cooling mode, **characterised by** having a device (12) for measuring the temperature (TV) of the medium conveyed by it and being configured to use this temperature (TV, TR) to determine the operating mode of the heating and cooling system (1) and to automatically adapt its control depending on the determined operating mode, in which control of the rotary pump (5) in cooling mode is realised with a first characteristic curve and in cooling mode with a second characteristic curve in heating mode, and the characteristic curve set vale of the second characteristic curve is less than the characteristic curve set value of the first characteristic curve, in which the device (12) is configured to perform switching to the corresponding characteristic curve depending on the determined operating mode.

15. Rotary pump according to claim 14, **characterised by** having the means to determine its delivery rate and being configured to switch itself off at least for a certain duration when the delivery rate is below a certain limit value.

16. Rotary pump according to claim 14 or 15, **characterised by** a configuration to realise the procedure according to one of the claims 1 through 13.

## Revendications

1. Procédé de commande d'une pompe centrifuge (5) à vitesse variable d'un système de chauffage/refroidissement combiné (1) pouvant fonctionner en mode de chauffage et en mode de refroidissement et comprenant au moins un consommateur (2, 2a-2d), sachant que la pompe centrifuge (5) transporte un fluide issu d'un générateur de chaleur et de froid (3, 4) centralisé, **caractérisé en ce que** la pompe centrifuge (5) assume, à partir d'une température (TV, TR) du fluide, le mode de fonctionnement du système de chauffage/refroidissement (1) et adapte sa régulation en fonction de ce mode de fonctionnement assumé, sachant que la régulation de la pompe centrifuge (5) en mode de refroidissement se fait en fonction d'une première courbe caractéristique et en mode de chauffage à partir d'une seconde courbe caractéristique et que la valeur nominale de courbe caractéristique de la seconde courbe caractéristique est inférieure à la valeur nominale de courbe caractéristique de la première courbe caractéristique et sachant qu'un équipement commute sur la courbe caractéristique correspondante en fonction du mode de fonctionnement assumé.

2. Procédé selon la revendication 1, **caractérisé en ce que** la pompe assume que le système est en mode de chauffage si la température (TV, TR) du fluide dépasse un seuil supérieur de température (To).

3. Procédé selon la revendication 2, **caractérisé en ce que** le seuil supérieur de température (To) est dans une plage allant de 28°C à 32°C, particulièrement autour des 30°C.

4. Procédé selon l'une des revendications précédentes, **caractérisé en ce que** la pompe assume que le système est en mode de refroidissement si la température (TV, TR) du fluide passe en dessous d'un seuil inférieur de température (Tu).

5. Procédé selon l'une des revendications précédentes, **caractérisé en ce que** la température est la température d'aller (TV) ou la température de retour (TR) locale d'au moins un consommateur (2, 2a-2d).

6. Procédé selon les revendications 4 ou 5, **caractérisé en ce que** le seuil inférieur de température (Tu) est dans une plage allant de 13°C à 17°C, particulièrement autour des 15°C.

7. Procédé selon l'une des revendications précédentes, **caractérisé en ce que,** lorsque la pompe assume que le système est en mode de refroidissement, la hauteur manométrique nominale de la pompe centrifuge (5) est réduite à une valeur située entre 40% et 60% de la hauteur manométrique maximale, particulièrement autour des 50% de la hauteur manométrique maximale.

8. Procédé selon l'une des revendications précédentes, **caractérisé en ce que,** lorsque la pompe assume que le système est en mode de chauffage, la hauteur manométrique nominale de la pompe centrifuge (5) est réduite à une valeur située entre 20% et 30% de la hauteur manométrique maximale, particulièrement autour des 25% de la hauteur manométrique maximale.

9. Procédé selon l'une des revendications précédentes, **caractérisé en ce que,** lorsque la pompe assume que le système est en mode de chauffage, la hauteur manométrique nominale de la pompe centrifuge (5) destinée au mode de refroidissement est réduite selon un ratio de hauteur manométrique préréglable par rapport au mode de chauffage, particulièrement selon un ratio de 2:1.

10. Procédé selon l'une des revendications 2 ou 3, renvoyant aux revendications 4 ou 5, **caractérisé en ce que** la pompe centrifuge (5) est arrêtée lorsque la température (TV, TR) du fluide est entre les seuils de température inférieur et supérieur (To, Tu).

11. Procédé selon la revendication 10, **caractérisé en ce que** la pompe centrifuge (5) est arrêtée pendant un premier délai (T1) puis redémarrée après écoulement de ce premier délai.

12. Procédé selon l'une des revendications précédentes, **caractérisé en ce que** la détermination du mode de fonctionnement après le démarrage de la pompe centrifuge (5) se fait après écoulement d'un second délai (T2).

13. Procédé selon l'une des revendications précédentes, **caractérisé en ce que** la pompe centrifuge (5) pendant la détermination du mode de fonctionnement fonctionne à hauteur manométrique maximale.

14. Pompe centrifuge (5) à vitesse variable pour un système de chauffage/refroidissement combiné (1) pouvant fonctionner en mode de chauffage et en mode de refroidissement, **caractérisée en ce qu'**elle présente un équipement (12) de mesure de la température (TV) du fluide qu'elle transporte et qu'elle est configurée pour assumer le mode de fonctionnement du système de chauffage/refroidissement (1) à partir de cette température (TV, TR) pour adapter de façon autonome sa régulation en fonction du mode de fonctionnement assumé, sachant que la régulation de la pompe centrifuge (5) en mode de refroidissement se fait en fonction d'une première courbe caractéristique et en mode de chauffage à partir d'une seconde courbe caractéristique et que la valeur nominale de courbe caractéristique de la seconde courbe caractéristique est inférieure à la valeur nominale de courbe caractéristique de la première courbe caractéristique et sachant que l'équipement (12) est configuré pour commuter sur la courbe caractéristique correspondante en fonction du mode de fonctionnement assumé.

15. Pompe centrifuge selon la revendication 14, **caractérisée en ce qu'**elle présente un dispositif de détermination de son débit de transport et est configurée pour s'arrêter, au moins pendant une période déterminée, lorsque le débit de transport passe en-dessous d'un certain seuil.

16. Pompe centrifuge selon les revendications 14 ou 15 **caractérisée en ce qu'**elle est configurée pour l'exécution du procédé selon l'une des revendications 1 à 13.
